# EUROPEAN PATENT SPECIFICATION

(11) **EP 0 605 927 B1**
(45) Date of publication and mention of the grant of the patent: **28.07.1999**
(21) Application number: 93203688.2
(22) Date of filing: 24.12.1993
(51) Int. Cl.: G06F 9/38

(54) **Improved very long instruction word processor architecture**
Verbesserte Architektur für Prozessor mit sehr langem Befehlswort
Architecture améliorée pour processeur à mot d'instruction très long

(30) Priority: 29.12.1992 US 998080
(43) Date of publication of application: 13.07.1994
(73) Proprietor: Koninklijke Philips Electronics N.V., 5621 BA Eindhoven (NL)
(72) Inventor: Slavenburg, Gerrit Ray, c/o Int.Octrooibureau B.V., NL-5656 AA Eindhoven (NL)
(74) Representative: de Haas, Laurens Johan

(56) References cited:
- EP-A- 0 416 345
- EP-A- 0 479 390
- 18TH INTERNATIONAL SYMPOSIUM ON COMPUTER ARCHITECTURE 27 May 1991 , TORONTO pages 160 - 168 XP00260615 NAKAJIMA ET AL. 'OHMEGA: A VLSI superscalar processor architecture for numerical applications'
- COMPCON SPRING '91 February 1991 , SAN FRANCISCO, US pages 4 - 7 MCGEADY ET AL. 'Performance enhancements in the superscalar i960MM embedded microprocessor'
- JOURNAL OF SUPERCOMPUTING vol. 6, no. 1 , March 1992 , DORDRECHT NL pages 5 - 48 DOROZHEVETS AND WOLCOTT 'The El'brus and Mars-M: Recent advances in Russian high-performance computing'

## Description

The invention relates to a processor according to the preamble of claim 1.

Such a processor is known from an article titled "OHMEGA: A VLSI Superscalar Processor Architecture for Numerical Applications" by Masaitsu Nakajima et al. and published in the proceedings of The 18th Annual International Symposium on COMPUTER ARCHITECTURE, may 27-30, 1991, Toronto Canada organized by the ACM.

This article concerns a superscalar processor capable of fetching two instructions at a time, of checking whether these two instructions have dependencies on previous instructions and of issuing these two instructions in parallel for execution when there are no such dependencies. This superscalar processor contains two functional units for floating point arithmetic and two functional units for integer arithmetic. The superscalar processor contains two multiport register files: one multiport register file for floating point numbers and one multiport register file for integers. The multiport register file for floating point numbers is shared by the two functional units for floating point arithmetic. The multiport register file for integers is shared by the two functional units for integer arithmetic.

For each of the functional units which can execute floating point arithmetic there is a respective pair of read ports of the register file for floating point numbers and for each of the functional units which can execute fixed point arithmetic there is a respective pair of the read ports of the register file for fixed point numbers. As a result any combination of two functional units executing instructions can read the register files in parallel, no matter whether this concerns two floating point instructions, two fixed point instructions or a combination of a floating point instruction and a fixed point instruction.

In an article titled "Performance enhancements in the superscalar i960MM embedded microprocessor" published in COMPCON SPRING '91, February 1991, San Fransisco, US pages 4-7 by McGeady et al. a processor is disclosed with a 6-ported register file, an instruction sequencer and a set of independent parallel execution units that operate on data in the register file.

In an article in the journal of supercomputing vol 6, no. 1 March 1992, (Dordrecht NL.) pages 5-48 by Mikhail N. Dorozhevets and Peter Wolcott an architecture is described containing seven functional units and a shared buffer memory made up of two multiport register files: stack and array element buffers, which is able to provide up to eight input operands for the functional units per cycle. In spite of an aggregate data bandwidth of up to eight read and four write operations per cycle, a special interconnect structure comprised of a full cross-bar switch has been implemented to solve contention problems. Up to three operations can be issued to the units in one clock period.

A different kind of processor is disclosed in European patent application No. EP 479390. This patent application concerns not a superscalar processor but a VLIW (Very Large Instruction Word) processor in which the parallel issuing of instructions is planned in advance by the compiler and not conditioned on run-time dependency checking. This processor contains an imitation multiport memory circuit interconnecting inputs and outputs of a group of functional units, all operating under control of a single series of VLIW instructions. The memory circuit comprises a plurality of separate memory units, each having a read port connected to a respective functional unit input, and a crossbar switching circuit connected between the functional unit outputs and write ports of the separate memory units. The memory circuit provides substantially the same performance as a true multiport memory but requires a smaller circuit area, allowing a larger processing device to be integrated in one chip than previously. Collisions for access to a memory unit can be resolved without rescheduling by use of a delay element and/or an additional write port to a memory unit.

Another VLIW processor is disclosed in an article by A. De Gloria, titled "A programmable Instruction format extension to VLIW architectures" and published in the CompEuro 1992 proceedings "Computer systems and software engineering" by the IEEE computer society press. This article also concerns not a superscalar processor but a VLIW (Very Large Instruction Word) processor in which the parallel issuing of instructions is planned in advance by the compiler and not conditioned on run-time dependency checking.

In each clock cycle a number of instructions is loaded from a program memory into the instruction register in parallel. The instructions in the register contain explicit opcodes and operand specifications for all of the functional units. The instructions from the register are supplied in parallel to the functional units.

It was realized, however, by De Gloria that in practical applications the functional units will be active all together only rarely. This realization led to an architecture in which fewer opcodes and operand specifications are provided in each instruction than would be needed for all the functional units together. By using multiplexers, each instruction is directed to a selected functional unit that has to be active. In this way it is possible to save on instruction memory size while hardly compromising performance. As the instruction is not so very long as in the original VLIW architecture, one might call this a "not-so-VLIW" architecture.

In this architecture, the instruction register will have to issue instructions to different functional units in different clock cycles. For this, the architecture according to the prior art provides multiplexers which select which instruction is fed to which functional unit, and thus issues its opcode and its operand specification to this selected functional unit.

The operand specification may contain the operand itself (immediate mode) or the address of the operand in a register file (register mode). For the latter mode each functional unit has at least one read port to a register file. When the instruction is in register mode the operand specification is supplied to an address input of the read port. In response, the content of the addressed register is output at the read port.

In order to support parallel execution of operations, the registers may be collected in a multi-port register file, with read ports which allow parallel reading from the registers. The register file has a respective port for each operand input of each functional unit. Each multiplier functional unit for example is connected to two respective read ports; in contrast, a "constant" unit, which supplies a constant specified by the instruction, is not connected to any read port.

In an integrated processor, such a register file requires a large area of silicon and consumes considerable power.

Amongst others, it is an object of the invention to reduce the silicon area and power consumption of the processor.

The processor according to the invention is characterized by the characterizing part of Claim 1.

As the area and power consumption of the register file are proportional to the number of ports it is possible to reduce the required area and power consumption if the number of ports is reduced. The number of ports that will be used in parallel is determined by the number of instructions that can cause execution to start in parallel and is smaller than the total number of operands that would be required together by all of the functional units that can access the register file. By providing programmable connections between the functional units and the ports to the register file, the number of ports to the register file can be made smaller than this total number of ports without any reduction of the amount of parallelism achievable by the processor.

In an embodiment of the invention the read ports are organized in groups of read ports, at least one particular group comprising at least two read ports, the read access providing means being arranged for selecting the read ports provided to the functional units per group, at least one of the functional units having at least two inputs for receiving respective operands simultaneously, the inputs being coupled to respective predetermined read ports from the particular group each time when that particular group is selected for that one of the functional units. As the instructions in the program need to identify only the group a smaller part of the instruction is occupied by port selection than would be needed if each port were identified individually in the instructions.

In an embodiment of the invention the instruction register is organized in the second number of respective issue slots for issuing the instructions, each issue slot corresponding to a respective group of at least one of the read ports, a particular functional unit being provided access to the read port or ports from the group corresponding to a particular issue slot each time when it executes the instruction from that particular issue slot. In this way, no separate identification of issue slot and the group of ports connected to a functional unit is needed, which means that a smaller instruction suffices for selection than if the instructions would contain a separate identification of the issue slot and the group.

In an embodiment of the invention each particular group contains a fourth number of predetermined ports, the fourth number being equal to a maximum number of operands required by any one of the functional units. In order that each group is able to supply any functional unit, the number of ports in each group is equal to the maximum number of operands needed by any of the functional units, even though some functional units may not actually require that many operands from the register file.

For example, if the maximum number of operands required is two (as in the case of a multiplier) the number of ports in a group provided to a functional unit is two. This number of ports is made available also to functional units that arranged for supplying constants, in which case no ports at all are needed.

In a further embodiment of the invention each particular issue slot contains a same predetermined number of address fields coupled to respective address inputs of the read ports of the group corresponding to that particular issue slot, for providing access to addressed operands at the read ports, irrespective of whether the functional unit executing the instruction from that particular issue slot requires the addressed operands. Thus, the address field are fed directly to the register file, irrespective of the functional unit which will have access to the port, irrespective even of whether that functional unit will be using the port at all. This speeds up operation because address decoding for the register file may start even before the selection is made of the functional unit which is to execute the instruction in the issue slot.

Preferably, the organization of the instruction register has a fixed format, that is, the general function (opcode, operand address, code for identifying which functional unit should execute an instruction etc.) of each specific part of the instruction register is the same, irrespective of the functional units used to execute the instruction, of the combination of functional units selected to execute in parallel or of the instructions themselves, at least for a number of the functional units and instructions. This is advantageous because address decoding can start before the instruction is decoded, but also for other reasons, for example because it simplifies the switching circuits that have to be provided between the instruction register and other units to route the instructions.

In an embodiment of the invention the processor is arranged such that at least one of the functional units, when it is caused to execute one of the instructions, also receives information from the address fields in the issue slot issuing that one of the instructions, said at least one of the functional units using the information as an operand during execution. Thus the operand may also be used as an immediate operand (e.g. a constant) for those operations which require immediate operands. Before the opcode is decoded, or at least before the identification of the functional unit for which the opcode is intended is decoded, it is not known whether the operand is a constant or an address. Therefore, at the same time as the operand is supplied to the functional unit, the register file will also start decoding the operand as an address. Waiting for decoding would slow down processing. If the operand is immediate, the data accessible from the register file will be ignored.

In an embodiment of the invention the processor, the multiport register file comprises at least one write port, the processor comprising write access providing means for selectively providing access to the write port or ports to those of the functional units that are being caused to execute the instructions in parallel and form a result therefrom. In this way it is possible to use fewer write ports to the register file than there are functional units, which reduces area and power consumption. The selection of the write ports may be planned without explicit selection from the issue slot. This need not reduce processing speed, because there is some time available between issuing the opcode and production of the result.

In an embodiment of the invention the write access providing means are arranged for coupling an output of one of the functional units, in combination with the content of said result address field to a write port a latency period after that functional units is caused to execute an instruction. In this way the number of write ports to the register file can be kept smaller than the number of functional units.

In an embodiment of the invention the instruction register is organized in the second number of respective issue slots for issuing the instructions, wherein each issue slot contains the same respective number of result address fields, the write access providing means being arranged for routing a content of the address fields to an address input or inputs of the write port or ports.

In an embodiment of the invention the write access providing means are arranged for coupling an output of one of the functional units, in combination with the content of said result address field to a write port a latency period after that functional units is caused to execute an instruction. When a functional unit executes an operation there will often be a latency of more than one clock cycle between the start of operation and the moment the result becomes available. This latency may vary according to the functional unit used.

In an embodiment of the invention the register file has at least two write ports, the write selecting means comprising pre-allocating means arranged for pre-allocating a particular write port to the one of the functional units for a clock cycle after said pre-allocating, in which clock cycle the result of execution in the one of the functional units will become available, and for coupling the output of the one of the functional units to the particular write port and feeding the content said result address field to the particular write port for the clock cycle. According to this embodiment the processor keeps track of the results that will become available and plans the allocation of write ports before the results are written.

In a further embodiment of the invention the pre-allocating means are arranged for selecting the particular write port from the write ports under a restriction that this particular write port is not previously allocated to one of the functional units for the clock cycle. In this way conflicts are avoided between functional units which provide results concurrently, even though the operations producing these results may have been started at different times.

These and other advantageous aspects of the invention will be described hereinafter and shown in the accompanying drawings.

### BRIEF DESCRIPTION OF THE DRAWINGS

Fig. 1 shows a prior art VLIW CPU.

Fig. 2 shows the format of a prior art VLIW instruction word.

Fig. 3 shows a VLIW CPU according to the invention.

Fig. 4 shows the format of a VLIW instruction according to the invention.

Fig. 5 shows more details of the switching matrix 401.

Fig. 6a shows inputs to and outputs from the register file.

Fig. 6b shows inputs to and outputs from the input switch control.

Fig. 7 shows opcode dispatch logic.

Fig. 8 shows detail of the output matrix 402.

Fig. 9a shows the register file write control unit.

Fig. 9b shows the RFWC/WE encoder.

Fig. 10 shows more detail of the register file write control unit.

Fig. 11 shows more detail of a SLOT block of Fig. 10.

VLIW CPU's can be used in a variety of applications: from super computers to work stations and personal computers or even as dedicated or programmable processors in work stations, personal computers and video or audio consumer products.

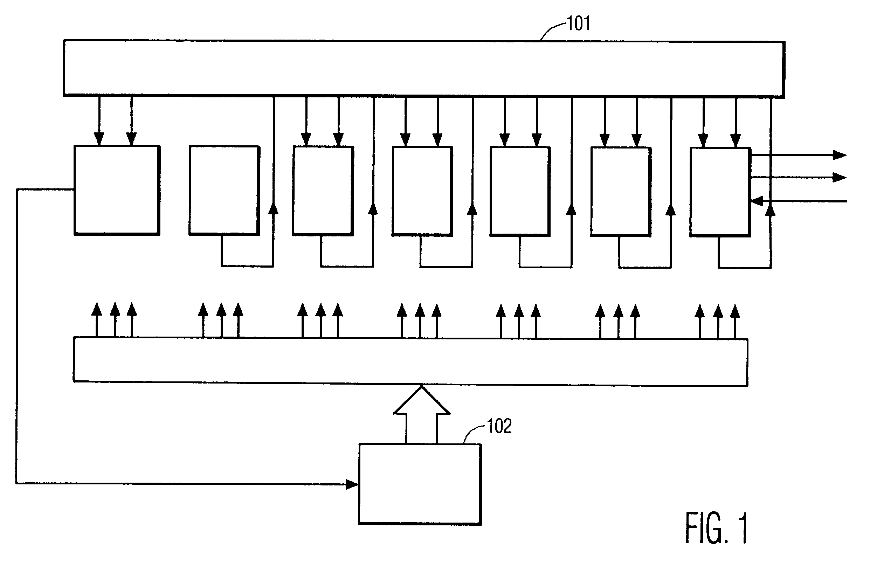

Fig. 1 shows a prior art VLIW arrangement. Instructions are loaded from the Instruction Memory 102 to the Instruction Issue Register IIR. In each clock cycle, a new very long instruction, is transmitted from the instruction issue register IIR. This instruction contains an issue slot for each of the functional units (CONTROL, CONST, ALU1, ALU2, MUL, FPU, MEM) in the VLIW CPU. The VLIW machine may contain any useful combination of function units, the example shown here being only one such combination. There may be more or less functional units and there may be functional units of different types, depending on the desired operations. Operands for the functional units are read from a shared, multi-ported register file 101. Results from the functional units are also written to this file.

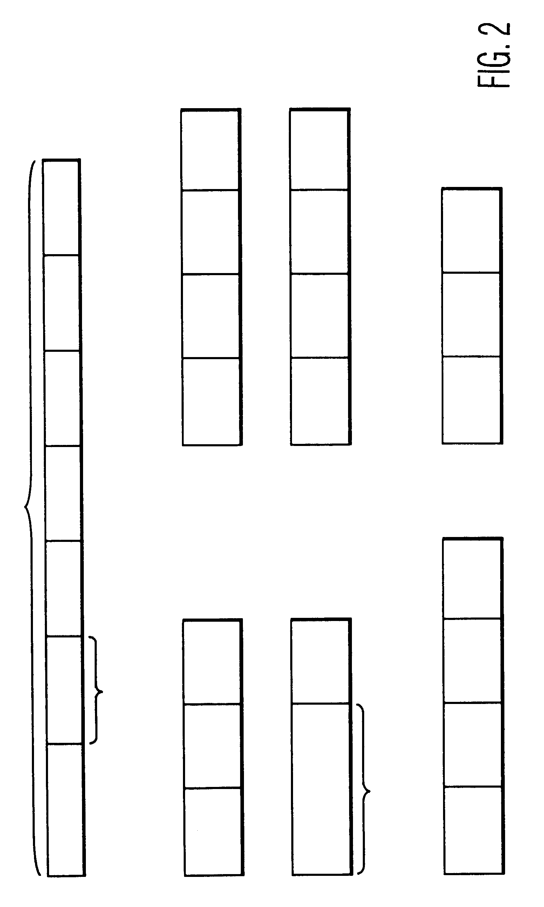

The issue slot specifies an operation that is started in the current clock cycle on that functional unit. Figure 2 shows a VLIW instruction 201 containing a CONTROL operation, a CONST operation, an ALU1 operation, an ALU2 operation, a MUL operation, an FPU operation, and a MEM operation. In other words the VLIW instruction contains one issue slot for each functional unit in the VLIW CPU of Fig. 1.

202 shows the contents of the issue slot specifying the CONTROL operation. This issue slot contains a CONTROL opcode and two register specifications, Rsrc1 and Rsrc2, which are source register 1 and source register 2, respectively.

203 shows the contents of the issue slot specifying the CONST operation. This issue slot contains a constant value and an register specification, Rdest, which is the destination register.

204 shows the contents of the issue slots containing the ALU operations. This issue slot contains an ALU opcode and three register specifications, Rsrc1, Rsrc2, and Rdest.

205 shows the contents of the issue slot containing the MUL operation. This issue slot contains a MUL opcode and three register specifications, Rsrc1, Rsrc2, and Rdest.

206 shows the contents of the issue slot containing the FPU operation. This issue slot contains an FPU opcode and three register specifications, Rsrc1, Rsrc2, and Rdest.

207 shows the contents of issue slot containing the MEM operation. This issue register includes a MEM opcode and two register specifications, Rsrc1 and Rsrc2 or Rdest.

Again the contents of these issue slots are exemplary and may be adjusted to any useful configuration of functional units.

In most prior art machines, an operation can be started on all functional units in each cycle. An operation started in cycle 'i' may complete in one cycle or take several cycles to complete. Completion is evidenced by the writing of the result of the operation in the destination register. For operations without result (such as 'store' operations), completion is the time at which the state change associated with the operation occurs.

Most of the function units of Fig. 1 are simple, such as the CONST (constant generation unit). This unit produces a constant that is put is put into the destination register. The ALU, MUL and FPU units perform arithmetic, logical and shift operations on one or two arguments and produce a single result in the destination register.

The CONTROL and MEM units are somewhat different.

The CONTROL unit determines the sequence in which instructions are issued. If a NOP (No Operation) is issued on the CONTROL unit, instructions will be issued in sequential order from the Instruction Memory. If a CJMPF or CJMPT (Conditional JuMP False and Conditional JuMP True, respectively) operation is issued on the control unit, the Rsrc1 register contents will be interpreted as having a truth, i.e. boolean, value and the Rsrc2 register content will be used as the address from which instruction issue will continue if and only if the specified condition is met, otherwise instruction issue will proceed sequentially.

The MEM unit performs load and store operations. In other words, it moves data words between the register file and system main memory. A load operation uses Rsrc1 as the address in main memory of the data word to be loaded, and Rdest identifies the register in which the loaded value is to be stored. A store operation uses the contents of Rsrc1 as the address and the contents of Rsrc2 as the value to be stored. There are, of course, many variants of the load and store operations. Since load instructions do not require Rsrc2 and store instructions do not require Rdest, the issue slot need only contain 2 register fields.

In order for a software program to run on a VLIW machine, a "fine grain parallel" or "instruction level parallel" translation must be found. This is done by a compiler that translates a conventional high-level programming language, such as ANSI-C, into instructions for a VLIW machine. Compilers for use in VLIW machines are described in John R. Ellis, BULLDOG: A compiler for VLIW architectures, MIT Press 1985, ISBN 0-262-05034-X

In order to operate the VLIW of Fig. 1 at its peak processing rate, 1 CONTROL, 1 CONSTANT, 2 INTEGER ALU, 1 INTEGER MULTIPLY, 1 FLOATING POINT, and 1 MEMORY operation must be issued in every cycle. Due to the nature of actual programs expressed in high level languages, it is not possible to find the appropriate mix of operations that will sustain this peak performance. After compiling, the set of operations that could be done in parallel in a given clock cycle are of a type mix that does not match the functional unit types that are available. In some cases, programs go through phases where less parallel operations can be found than the number of units in the machine.

This results in several problems.

First, register file ports are under utilized. The silicon area and power consumption of the central register file are proportional to the total number of ports. Hence it is important that the utilization of such ports be high.

Second, the instruction bandwidth needed to sustain the VLIW CPU at or near its peak performance is high. Empty slots, containing NOP codes, contribute to this bandwidth. The bandwidth translates directly into I-Cache (Instruction Cache) size and cost of the buses and other memory system components.

Third, the size of the code for a program translated for a VLIW is larger than the size of the same program when translated for a RISC style CPU. Even though the performance of a VLIW is higher than that of a RISC, the cost performance ratio of a VLIW is less than that of a RISC.

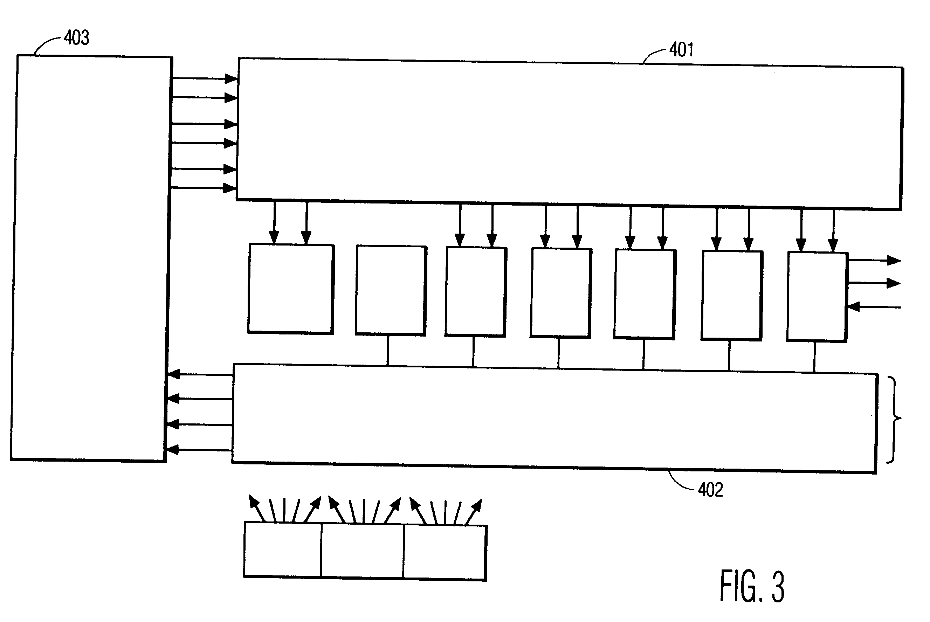

Figure 3 shows a VLIW CPU according to the invention. The IIR now has less issue slots than there are functional units in the machine. As an example, for a machine with 7 functional units, 3 issue slots may suffice. In general, the number of issue slots for a given number and type of functional units is a tradeoff between average performance and cost, but it is reasonable to expect that a machine with N units will have between N/4 and 2N/3 issue slots.

The CPU includes a register file 403 having a plurality of groups of read ports ((R₁ₐ,R_{1b}),(R₂ₐ,R_{2b}),(R₃ₐ,R_{3b})). Examples of suitable register files can be found in the Intel iWARP & i960 chips. There is a group of read ports for each slot of the IIR. The read ports are for reading the contents of registers in the register file. The number of ports in each group is the same as the maximum number of source registers needed by any functional unit. In this case, no functional unit needs more than two source registers, so each group of read ports includes two read ports. Thus there are three groups of two read ports, giving six read ports.

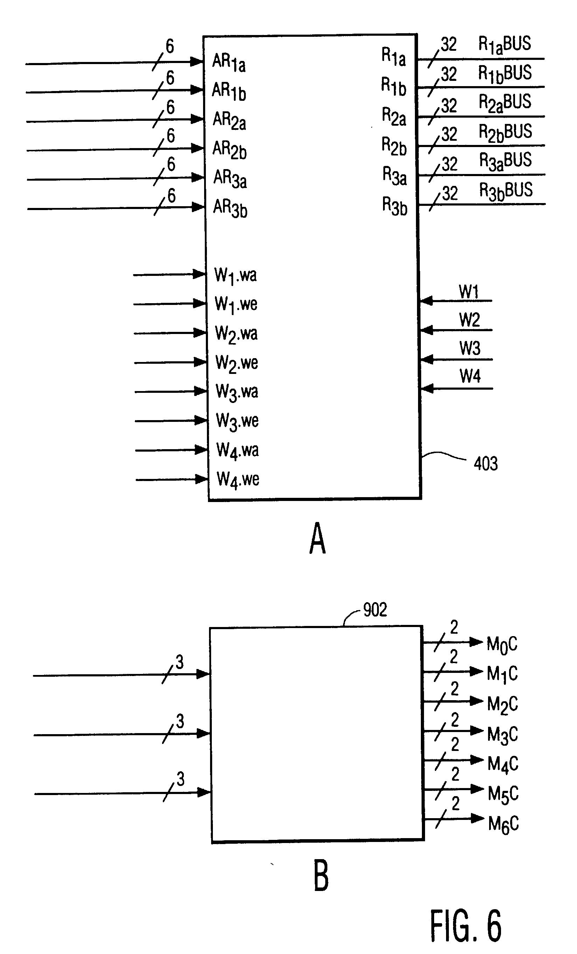

A switching matrix 401, controlled by the input switch control 902 (Fig. 6b) determines which read port to connect to the inputs of which functional unit.

The register file also has a plurality of groups of write ports (W₁, W₂, W₃, W₄). There is at least one group of write ports for each slot of the IIR. The number of write ports in each group is the maximum number of destination registers needed by any functional unit. No functional unit in this example needs more than one destination register, therefore there is only one write port in each group of write ports.

A second switching matrix 402 connects outputs of the functional units to the write ports under control of the write control unit (RFWC).

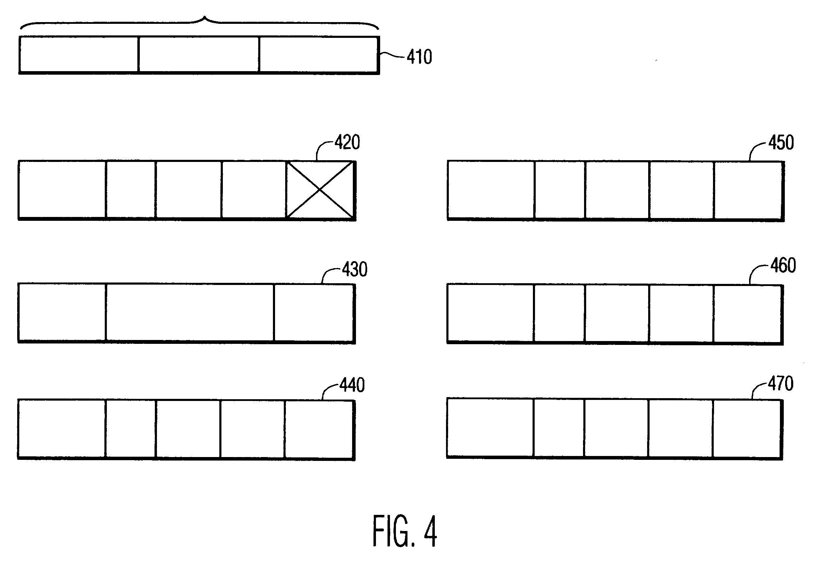

Figure 4 shows the format of the new VLIW instruction 410. This instruction has three slots for operation. Each of the slots may contain any type of operation. There are, as before, six types of operations, one for each of the types of functional units, CONTROL, CONST, ALU, MUL, FPU, and MEM.

The issue slots differ from the previous issue slots in several respects.

First, the issue slots are all of the same length. Format of the contents of the issue slots is shown at 420, 430, 440, 450, 460, and 470 for the CONTROL, CONST, ALU, MUL, FPU, and MEM units, respectively. The constant length of the slots results in the necessity for insertion of some blank space at the end of the CONTROL type operation 420.

Second, the issue slots all have some way of identifying which functional unit is to execute the operation. In the figure, all of the issue slots have a UNIT ID field, which identifies which functional unit the operation is destined for. For a machine of up to 8 functional units, this UNIT ID field need only be three bits wide.

Those of ordinary skill in the art might devise many other ways of identifying the unit. One alternative is to have the opcode imply the unit. Another alternative is to have the opcode imply the unit type and the hardware allocate a unit of that type.

In the VLIW CPU of Fig. 3, in each clock cycle, a three operation instruction is issued from the IIR. The source register fields (Rsrc1,Rscrc2) in the issue slots are used to address the register file read ports ((R₁ₐ,R_{1b}),(R₂ₐ,R_{2b}),(R₃ₐ,R_{3b})). Based on the unit identity field, the opcode controls are routed to the designated functional unit.

The destination register fields of all issue slots are routed to the write control unit (RFWC) which knows the latency of each functional unit and keeps track of when results are produced. This write control unit allocates appropriate buses to write results into the register file. For a three issue slot machine, there may be more than three write buses in order to handle traffic bursts that arise due to unequal unit latencies. Here there are four write buses for this eventuality.

The above example is only one embodiment. The designer needs to chose the number and type of functional units depending on the expected work load. The designer also needs to chose a number of issue slots in the IIR and a number of write buses to optimize cost/performance.

The architecture of the preferred embodiment gives easy upward compatibility. Suppose, for instance, it were desired to build a higher performance CPU, for instance including an additional FPU, ALU, and CONST and by increasing the number of slots in the IIR to four. The new machine can still use the binary unit ID's from the old machine, so long as the old unit identity field values map to the same unit types in the new machine. Code images for the old machine can then be run on the new machine by, e.g. during the program load phase, adding an additional NOP operation. The unit ID fields need only be stuffed with additional zeroes in case the new machine has a wider field than the old machine. However, no recompiling, re-scheduling, or re-assembly of codes is necessary and all compatibility issues can be solved at program load time.

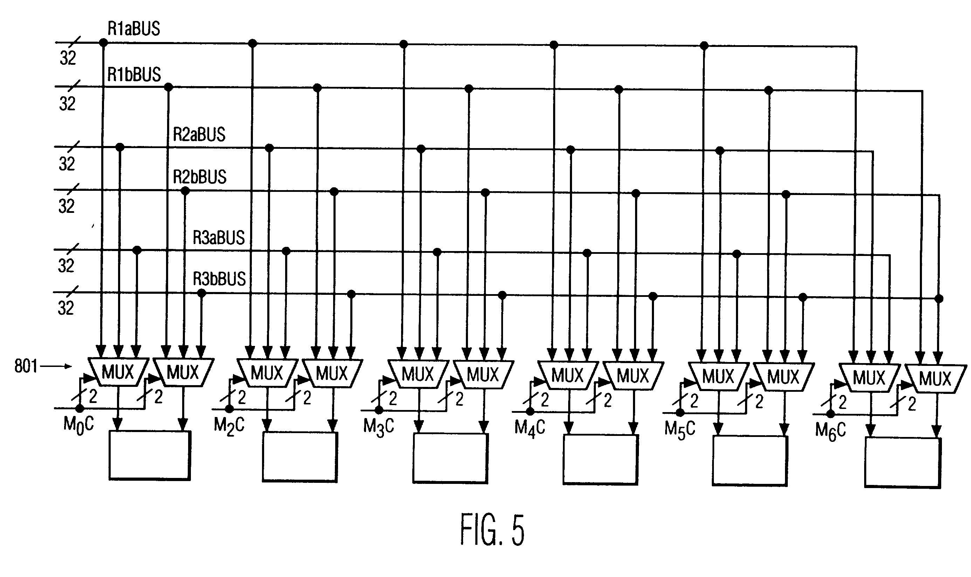

Figure 5 shows an example of an implementation of the switching matrix between the register file read ports ((R₁ₐ,R_{1b}),(R₂ₐ,R_{2b}),(R₃ₐ,R_{3b})) and functional unit inputs. One of ordinary skill in the art might devise any number of alternative embodiments for this switching matrix.

Each register file read port connects to inputs of all multiplexers 801 associated with the corresponding functional unit input ports, i.e. port R_{1b} connects to all 'B' input multiplexers of all functional units.

When an instruction reaches the issue stage, the IIR contains the binary code for that instruction. As soon as the instruction issues, the Rsrc1 and Rsrc2 field of each issue slot are use as read addresses to the register file read ports ((R₁ₐ,R_{1b}),(R₂ₐ,R_{2b}),(R₃ₐ,R_{3b})). This causes a total of 6 registers to be read. Not all of these registers may actually be needed. For instance, slot 1 may be issuing a constant type operation, in which case the register file addresses are random. However, if the operation that issued needed Rsrc1, Rsrc2, or both, the appropriate register values will become available to all MUX inputs of the functional units, in particular to the MUX of the functional unit that the operation is to be executed on.

Fig. 6a shows the register file 403 with its read ports and addressing ports. Fig. 6b shows the input switch control logic block 902.

As shown, read address inputs ((AR₁ₐ,AR_{1b}), (AR₂ₐ,AR_{2b}), (AR₃ₐ,AR_{3b})) to the Register File 403, are all six bits wide and supplied from the register source fields of the Instruction Issue Register IIR, i.e. IIR.issue1.Rsrc1, IIR.issue1.Rsrc2, IIR.issue2.Rsrc1, IIR.issue2.Rsrc2, IIR.issue3.Rsrc1, and IIR.issue3.Rsrc2, respectively. Based on these addresses, operands are supplied as needed to the functional units from the read ports ((R₁ₐ,R_{1b}),(R₂ₐ,R_{2b}),(R₃ₐ,R_{3b})).

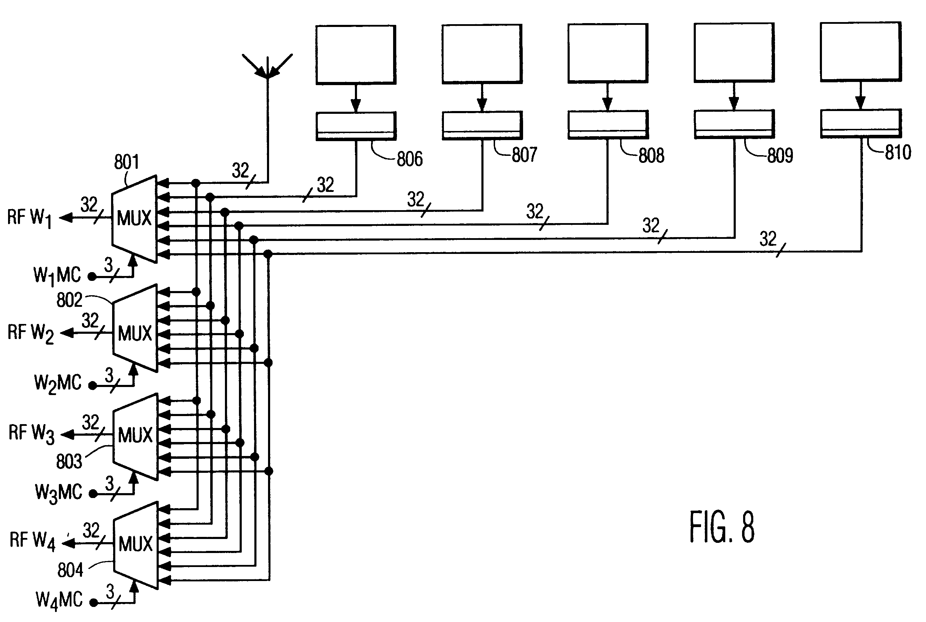

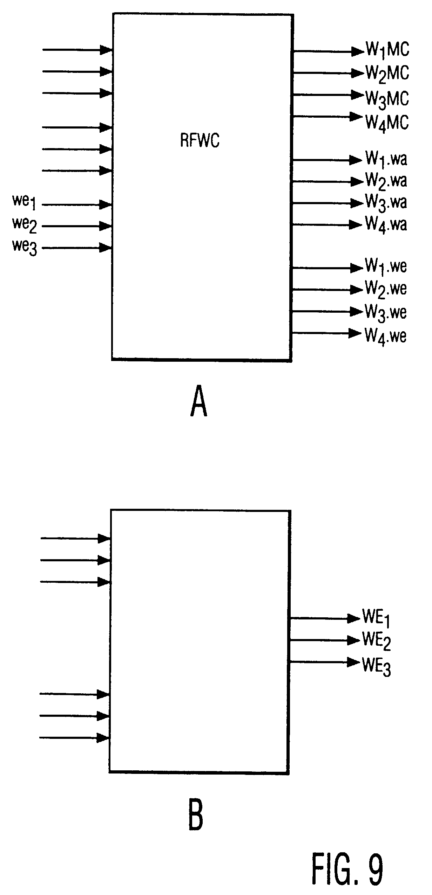

Write address inputs (W₁.wa, W₂.wa, W₃.wa, W₄.wa) and write enable inputs (W₁.we, W₂.we, W₃.we, W₄.we) are supplied from the RFWC of Fig. 9a. Results of operations are supplied on W₁, W₂, W₃, and W₄ from multiplexers 801, 802, 803, and 804 of Fig. 8.

Addressing inputs to the input switch control 902, i.e. IIR.issue1.UNITID, IIR.issue2.UNITID, IIR.issue3.UNITID, are supplied from the unit id fields of the instruction issue register. From these addressing inputs, input switch control 902, determines the two bit signals M₀C, M₁C, M₂C, M₃C, M₄C, M₅C, and M₆C. These multiplexer control signals are supplied to the multiplexers 801, to choose which read buses from the register file are supplying operands to the respective functional unit inputs.

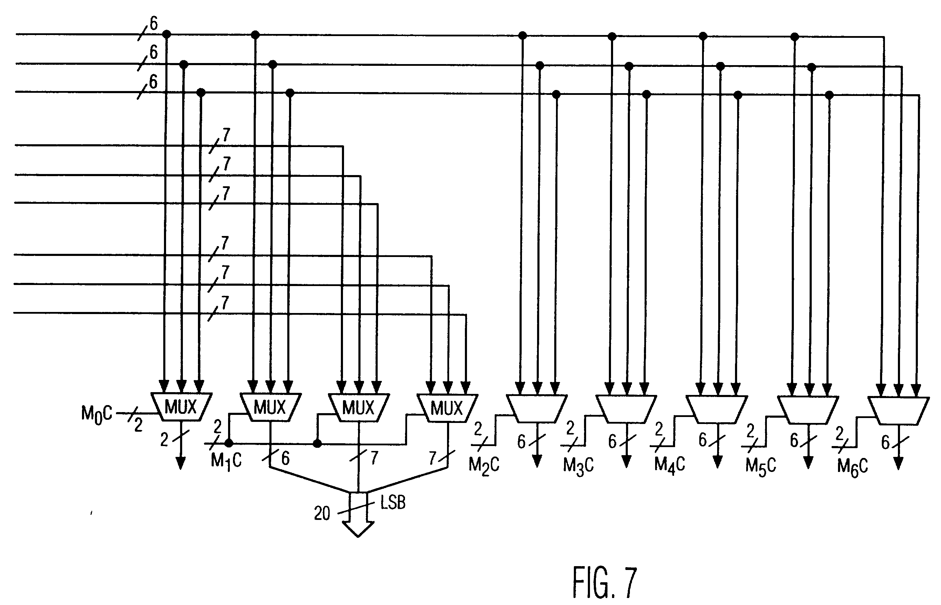

Fig. 7 shows an example of the opcode formation and dispatch logic that generates all opcodes for all functional units.

The input switch control 902 is a functional logic block which can be implemented in a number of known ways, such as standard cell logic, PLA, or ROM lookup table. For purposes of discussion, the following unit ID assignment will be assumed: unit 0 = control; 1 = CO, 2 = ALU1, 3 = ALU2, 4 = MUL, 5 = FPU, and 6 = MEM. It will also be assumed that a multiplexer control field of 1 selects the left most input, 2 selects the middle input, and 3 selects the right most input. From these assumptions a conversion table can be constructed which converts from any combination of unit ID assignments to the necessary combination of multiplexer control fields. Some example input and output vectors from this table are given below:

| Issue 1 | Issue 2 | Issue 3 | Outputs | | | | Note |
|---|---|---|---|---|---|---|---|
| unit 1 | unit 4 | unit 6 | M₁C = 1 | M₄C = 2 | M₆C = 3 | others = 0 | (1) |
| unit 0 | unit 2 | unit 3 | M₀C = 1 | M₂C = 2 | M₃C = 3 | others = 0 | (2) |

Note (1) Issue slot 1 issues a CONST (constant) unit operation. Since the CONST unit has no inputs, it has no multiplexer controls; however, the opcode routing logic in Fig. 7 needs the M₁C signal to control the CO unit opcode result multiplexer. Issue slot 2 issues a MUL operation, hence M₄C = 2 causes the two multiplexers of the MUL (multiplier) unit to be set to select the R₂ port values. All other multiplexers are set to position 0, which on the opcode dispatch logic has a special use. If the unit 6 operation issued by issue slot 3 is a load, the opcode routed to the MEM unit will cause it to ignore the value of R_{3b} BUS, since the Rsrc2 operand is not used by the load operation.

Note (2): All multiplexers for a unit to which an operation is issued select the register port corresponding to the issue slot issuing their operation. This is the general rule for constructing the logic equations of the input switch control block.

Parallel to the register read port value switching, the circuitry in Fig. 7 generates the individual functional unit opcodes. The same multiplexer control signals are used in this circuit as in Fig. 5 The rule is that if issue slot X contains an operation for unit Y, then unit Y receives multiplexer control signal value X, and hence Y's multiplexer selects the opcode field in issue slot X as the opcode for its operation.

Any unit to which nothing was issued receives a multiplexer select signal of zero. This causes generation of a no operation (NOP) opcode for that unit. This can either be done by adding an extra input to the multiplexers receiving that no operation code (not shown) or by changing the logic equations of the opcode multiplexer units.

In Fig. 7, the CONST unit is special. It is really a dummy unit. It generates, as result output, the binary value that is the concatenation of the opcode, Rsrc1 and Rsrc2 fields of the issue slot in which a CO unit operation was issued.

Those of ordinary skill in the art might devise any number of alternative embodiments for Figures 5-7. For instance, high performance machines will probably be pipelined. In such cases pipeline registers and bypass circuitry will be added to this basic design. Also, the UNITID and opcode fields in an operation may be combined into a single field with movable separation between the fields. Such a movable separation would accommodate the different numbers of opcode bits required for different functional units. For example, an ALU needs many more opcode bits than a MUL or MEM unit. Thus the UNITID field should be shorter and the opcode field longer for the ALU than for the MUL and MEM units. In such cases, the input switch control block may receive the longest possible set of bits that indicates the unit ID, at the same time the opcode dispatch logic receives the longest possible set of bits that indicates an opcode.

Other possible variations may exist. A UNITID field need not be used. The hardware can use a table to map which opcode goes to which functional unit type and assign unit ID fields dynamically.

Fig. 8 shows more detail of the output matrix 402. The functional units write results of operations performed in output registers 806, 807, 808, 809, and 810. The registers 806, 807, 808, 809, and 810 are connected to write port multiplexers 801, 802, 803, and 804, which have 32 bit bus inputs. The CONST unit opcode directly connects to the multiplexers 801, 802, 803, and 804, since in the CONST unit no time elapses between opcode and result availability, as seen in Fig. 7. Multiplexers 801, 802, 803, and 804 choose which of their inputs to route to their outputs W₁, W₂, W₃, and W₄, respectively, based on control inputs W₁MC, W₂MC, W₃MC, and W₄MC, respectively. The outputs W₁, W₂, W₃, and W₄ are each 32 bits wide and connect to the write ports of register file 403. The control inputs W₁MC, W₂MC, W₃MC, and W₄MC are supplied by the register file write control unit (RFWC).

Fig. 9a shows the register file write control unit (RFWC). The inputs of the RFWC are the unit id's (issue1.unitid, issue2.unitid, issue3.unitid) and destination register addresses (issue1.rdest, issue2.rdest, issue3.rdest) from the IIR.

The RFWC produces, as outputs, the four multiplexer control signals (W₁MC, W₂MC, W₃MC, and W₄MC), four write addresses (W₁.wa, W₂.wa, W₃.wa, W₄.wa) for addressing the register file, and four write port write enable signals (W₁.we, W₂.we, W₃.we, W₄.we) also directed to the register file.

Fig. 9b shows a RFWC/WE encoder that takes unit ID's and opcodes and produces write enable inputs for the RFWC. The encoder can be a ROM, PLA, or logic. The encoder yields a "1" indicating that the operation has a result for the following operations: CONST, ALU, MUL, FPU, and MEM load. The encoder yields a "0" indicating no result for CONTROL and MEM store.

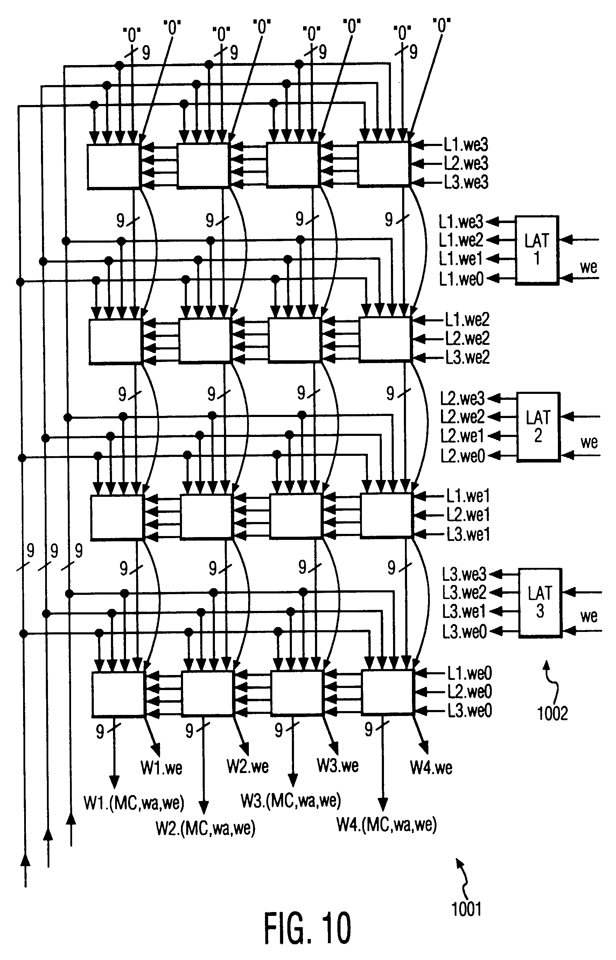

Fig. 10, shows an implementation example for the RFWC block. This implementation includes two sub-blocks, the SLOT block 1001 and the LAT block 1002. There are four rows and four columns of SLOTs. The four columns are needed for the four write ports, W₁, W₂, W₃, and W₄, of the register file. The four rows are needed for four possible latencies of the functional units, see table I above. The latency of a functional unit is the number of clock cycles between starting an operation on that unit and availability of the result of the operation at the input of the write multiplexers.

**TABLE I**

| UNIT | LATENCY |
|---|---|
| CONTROL | N/A |
| CONST | 0 |
| ALU1, ALU2 | 1 |
| MEM | 1 |
| MUL | 2 |
| FPU | 3 |

For each unit i.d., such as MUL, if the corresponding input write enable signal is TRUE, the latency is found by the LAT blocks of the RFWC. In the case of the MUL unit, the latency is 2. The RFWC then sets a write enable flag for the latency row corresponding to the latency found. For the MUL functional unit, a free SLOT is located in the latency row 2, where unit id write address and write enable information are stored. During the following two clock cycles, this information is passed along a column to the latency row 0.

Each SLOT row is used for a particular latency. The top row is used for latency 3 and the bottom row is used for latency 0. Each row passes data to the row below it in every clock cycle. The data passed is the unit i.d., write address, and write enable indication.

The output of the latency row 0 is the output of the RFWC block.

Each row gets three write enable control signals, produced by the LAT sub-block 1002. The rightmost SLOT in a row gets these control inputs. After some logic operations, this rightmost SLOT passes three control outputs to the SLOT block next to the left within the same row. For example, SLOT 33 gets three write enable signals (L1.we, L2.we, L3.we) from the LAT blocks. Control output of SLOT 33 is passed to the slot 23. Data output of SLOT 33 is passed to the SLOT 32.

Each LAT unit gets a unit i.d. (unitid) and write enable signal (we) from an issue slot in the IIR. There are three LAT units, because there are three slots in the IIR of the present example. The LAT unit produces four write enable signals (we0, we1, we2, we3). If the unit id is CONST (latency = 0) and the corresponding we input is TRUE, then we0 is made true. If the unit i.d. is ALU1, ALU2, or MEM (latency = 1) and the corresponding we input is TRUE, then we1 is made TRUE. If the unit i.d is MUL (latency = 2) and issue.we is TRUE, then we2 is made TRUE. If the unit i.d. is FPU (latency = 3) and issue.we is TRUE, then we3 is made TRUE.

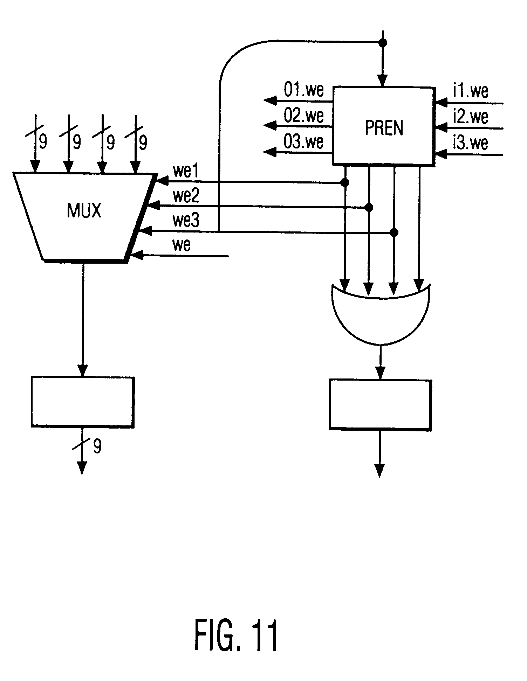

Fig. 11 shows an implementation example for one of the SLOT sub-blocks. Each SLOT gets four data inputs (in1, in2, in3, in4) from the IIR and produces one data output (out). In1, in2, in3, in4, and out each have 9 wires, three to pass the unit id and 6 to pass the write address (wa). The first input (in1) is IIR.issue1.unitid and IIR.issue1.Rdest. The second input (in2) is IIR.issue2.Rdest and IIR.issue2.unitid. The third input (in3) is IIR.issue3.Rdest and IIR.issue3.unitid. The fourth input (in4) is connected to the output of a row slot above, except in the top row where this input is connected to receive all zeroes.

Each SLOT gets four control signals ("we indicator in", i1.we, i2.we, and i3.we). The signals i1.we, i2.we, and i3.we come from the next block to the right, except for the rightmost block in a row, where these signals come from the corresponding LAT block. The signal "we indicator in" comes from the next block up, except for the top block where it is a wired "0".

In addition, the "we indicator in" of one row slot is connected to the "we indicator out" of the above SLOT. SLOTs in the top row receive a "0" "we indicator in".

Each SLOT produces four control signals (o1.we, o2.we, o3.we, and "we indicator out"). The signals o1.we, o2.we, and o3.we are supplied to a next block to the left, except in a leftmost slot where they are not connected. The signal "we indicator out" is supplied to a next block below, except in a bottom most slot where this signal is supplied to the register file as the write port enable signal (W₁.we, W₂.we, W_{3.we, W}4.we). The out.unitid signals of the bottom row are the W₁MC, W_{2MC,} W3MC, and W₄MC signals applied to the multiplexers 801, 802, 803, and 804 of Fig. 8. The out.wa signals of the bottom row are the register file write addresses (W₁.wa, W₂.wa, W₃.wa, W₄.wa) applied to register file 403 in Fig. 6b.

Each SLOT has four sub-blocks: MUX, a 4:1 multiplexer which chooses one of in1, in2, in3 and in4 under control of we1, we2, we3, and we; PREN, a priority encoder which produces we1, we2, we3, we, o1.we, o2.we, and o3.we from inputs we, i1.we, i2.we, and i3.we; a four input logical OR gate, which has we1, we2, we3 and we as inputs. The MUX outputs to register REG1 and the OR outputs to register REG2. The outputs of the registers are the output of the block. The slots of the lowest row lack these registers, as no storage is necessary.

The PREN unit makes sure that for all possible combinations of write enables for all latencies a free slot is found in the required latency row. A truth table for PREN is given in TABLE II below.

**TABLE II**

| PREN LOGIC TRUTH TABLE | | | | | | | | | |
|---|---|---|---|---|---|---|---|---|---|
| i1.we | i2.we | i3.we | we indicator in | we1 | we2 | we3 | o1.we | o2.we | o3.we |
| x | x | x | 1 | 0 | 0 | 0 | i1.we | i2.we | i3.we |
| 1 | x | x | 0 | 1 | 0 | 0 | 0 | i2.we | i3.we |
| 0 | 1 | x | 0 | 0 | 1 | 0 | 0 | 0 | i3.we |
| 0 | 0 | 1 | 0 | 0 | 0 | 1 | 0 | 0 | 0 |
| 0 | 0 | 0 | 0 | 0 | 0 | 0 | 0 | 0 | 0 |

The MUX of Fig. 11 connects in4 to out if the we indicator in signal is active. It connects in3 to out if we3 is active, in2 if we2 is active, and in1 if we1 is active, respectively. The PREN unit ensures that only one of these is active ("1") at a time.

The RFWC write control unit hardware described in Fig. 9-11 requires that the programmer or compiler prevent more than four writes ever occurring at one time. For instance, the following operation sequence is forbidden
time i : FPU ... ...
i+1 : MUL ... ...
i+2 : ALU₁ ALU₂ ...
i+3 : CO ... ...
This example sequence would require 5 write buses to the register file, one to write the result of the CO operation completing in cycle i+3, two for the ALU₁ and ALU₂ operations started in "i+2" and completing in "i+3", one for the MUL operation, and one for the FPU operation.

Forbidding certain rare sequences of operations barely influences system performance and lowers the hardware cost. In this particular example, a register file with four write ports suffices instead of a more expensive register file with five write ports.

## Claims

1. A processor comprising
a) a first number of functional units (ALU1, ALU2, MUL, FPU, MEM), for executing respective operations in parallel with each other, the first number being at least three;
b) an instruction register (CIIR) for holding a second number of instructions, the second number being at least two and less than the first number and for holding a code for specifying which instruction is for which of the functional units;
c) execution control means for causing appropriate ones of the functional units to execute the instructions in the instruction register in parallel;
d) a multiport register file (403) for storing operands relating to the instructions in the instruction register; the multiport register file (403) comprising a third number of equally wide read ports (R₁ₐ, R_{1b}, R₂ₐ, R_{2b}, R₃ₐ, R_{3b}) for affording parallel access to the operands, the third number of read ports (R₁ₐ, R_{1b}, R₂ₐ, R_{2b}, R₃ₐ, R_{3b}) being at least equal to a maximum number of operands required from the register file (403) by any subset of the functional units (ALU1, ALU2, MUL, FPU, MEM) which consists of the second number functional units, the third number being smaller than a total number of operands required by the functional units together, the processor comprising
e) read access providing means for selectively providing functional units that are being caused to execute the instructions in parallel access to the read ports, characterized in that the registers in the multiport register file (403) are accessible for all of said first number of functional units (ALU1, ALU2, MUL, FPU, MEM).

2. A processor according to Claim 1, the read ports being organized in groups of read ports, at least one particular group comprising at least two read ports, the read access providing means being arranged for selecting the read ports provided to the functional units per group, at least one of the functional units having at least two inputs for receiving respective operands simultaneously, the inputs being coupled to respective predetermined read ports from the particular group each time when that particular group is selected for that one of the functional units.

3. A processor according to Claim 1 or 2, wherein the instruction register is organized in the second number of respective issue slots for issuing the instructions, each issue slot corresponding to a respective group of at least one of the read ports, a particular functional unit being provided access to the read port or ports from the group corresponding to a particular issue slot each time when it executes the instruction from that particular issue slot.

4. A processor according to Claim 2 or 3, wherein each particular group contains a fourth number of predetermined ports, the fourth number being equal to a maximum number of operands required by any one of the functional units.

5. A processor according to Claim 3 or 4 wherein each particular issue slot contains a same predetermined number of address fields coupled to respective address inputs of the read ports of the group corresponding to that particular issue slot, for providing access to addressed operands at the read ports, irrespective of whether the functional unit executing the instruction from that particular issue slot requires the addressed operands.

6. A processor according to Claim 5, arranged such that at least one of the functional units, when it is caused to execute one of the instructions, also receives information from the address fields in the issue slot issuing that one of the instructions, said at least one of the functional units using the information as an operand during execution.

7. A processor according to any one of the Claims 1 to 6, wherein the multiport register file comprises at least one write port, the processor comprising write access providing means for selectively providing access to the write port or ports to those of the functional units that are being caused to execute the instructions in parallel and form a result therefrom.

8. A processor according to Claim 7, wherein the instruction register is organized in the second number of respective issue slots for issuing the instructions, wherein each issue slot contains the same respective number of result address fields, the write access providing means being arranged for routing a content of the address fields to an address input or inputs of the write port or ports.

9. A processor according to Claim 8, the write access providing means being arranged for coupling an output of one of the functional units, in combination with the content of said result address field to a write port a latency period after that functional units is caused to execute an instruction.

10. A processor according to Claim 9, wherein the register file has at least two write ports, the write selecting means comprising pre-allocating means arranged for pre-allocating a particular write port to the one of the functional units for a clock cycle after said pre-allocating, in which clock cycle the result of execution in the one of the functional units will become available, and for coupling the output of the one of the functional units to the particular write port and feeding the content said result address field to the particular write port for the clock cycle.

11. A processor according to Claim 10, wherein the pre-allocating means are arranged for selecting the particular write port from the write ports under a restriction that this particular write port is not previously allocated to one of the functional units for the clock cycle.

12. A processor according to Claim 11, the pre-allocating means comprising a matrix of registers.

## Patentansprüche

1. Prozessor mit
a) einer ersten Anzahl von Funktionseinheiten (ALU1, ALU2, MUL, FPU, MEM) zum Durchführen jeweiliger Operationen parallel zueinander, wobei die erste Anzahl zumindest drei ist;
b) einem Befehlsregister (CIIR) zum Festhalten einer zweiten Befehlszahl, wobei die zweite Zahl wenigstens zwei beträgt und weniger ist als die erste Zahl, und zum Festhalten eines Codes zum Spezifizieren, welcher Befehl für welche der Funktionseinheiten gemeint ist;
c) Durchführungssteuermitteln zum Veranlassen der geeigneten Funktionseinheiten zum parallelen Durchführen der Befehle im Befehlsregister;
d) einer Multiport-Registerdatei (403) zum Speichern von Operanden bezüglich der Befehle im Befehlsregister; wobei die Multiport-Registerdatei (403) eine dritte Anzahl von Schreibporten (R₁ₐ, R_{1b}, R₂ₐ, R_{2b}, R₃ₐ, R_{3b}) mit gleicher Breite zum Gewähren von parallelem Zugriff zu den Operanden enthalten, die dritte Anzahl von Schreibporten (R₁ₐ, R_{1b}, R₂ₐ, R_{2b}, R₃ₐ, R_{3b}) wenigstens gleich einer Höchstzahl von Operanden ist, die für die Registerdatei (403) von jeder Untergruppe der Funktionseinheiten (ALU1, ALU2, MUL, FPU, MEM) erforderlich ist, die aus der zweiten Anzahl von Funktionseinheiten besteht, und die dritte Anzahl kleiner ist als eine Gesamtzahl von Operanden, die zusammen von den Funktionseinheiten erfordert werden, und der Prozessor
e) Lesezugriff gewährende Mittel zum selektiven Einschalten von Funktionseinheiten enthält, die zum Durchführen der Befehle in parallelem Zugriff zu den Leseporten veranlasst werden,
dadurch gekennzeichnet, dass die Register in der Multiport-Registerdatei (403) für alle der ersten Anzahl von Funktionseinheiten (ALU1, ALU2, MUL, FPU, MEM) zugänglich sind.

2. Prozessor nach Anspruch 1, wobei die Leseporte in Gruppen von Leseporten organisiert sind, wenigstens eine besondere Gruppe wenigstens zwei Leseporte enthält, die Lesezugang versorgenden Mittel zum Wählen der Leseporte für die Funktionseinheiten je Gruppe angeordnet sind, wenigstens eine der Funktionseinheiten zumindest zwei Eingänge zum gleichzeitigen Empfangen jeweiliger Operanden enthält, und die Eingänge mit jeweiligen vorgegebenen Leseporten für die besondere Gruppe gekoppelt sind, jedes Mal wenn diese besondere Gruppe für diese eine der Funktionseinheiten gewählt wird.

3. Prozessor nach Anspruch 1 oder 2, worin das Befehlsregister in der zweiten Anzahl jeweiliger Ausgabeschlitze zum Ausgeben der Befehle organisiert ist, wobei jeder Ausgabeschlitz einer jeweiligen Gruppe zumindest eines der Leseporte entspricht, eine besondere Funktionseinheit Zugang zum Leseport oder zu Leseporten aus der Gruppe entsprechend eines besonderen Ausgabeschlitzes gewährt wird, jedes Mal wenn sie den Befehl aus diesem besonderen Ausgabeschlitz durchführt.

4. Prozessor nach Anspruch 2 oder 3, worin jede besondere Gruppe eine vierte Anzahl vorgegebener Porte enthält, wobei die vierte Anzahl gleich einer Höchstzahl von Operanden ist, die von einem der Funktionseinheiten erfordert wird.

5. Prozessor nach Anspruch 3 oder 4, worin jeder besondere Ausgabeschlitz eine gleiche vorgegebene Anzahl von Adressfeldern enthält, die mit jeweiligen Adresseingängen der Leseporte der Gruppe entsprechend jenem besonderen Ausgabeschlitz gekoppelt ist, um Zugriff zu adressierten Operanden an den Leseporten zu gewähren, ungeachtet ob die Funktionseinheit, die dem Befehl für diesen besonderen Ausgabeschlitz durchführt, die adressierten Operanden erfordert.

6. Prozessor nach Anspruch 5, in derartiger Anordnung, dass zumindest eine der Funktionseinheiten, wenn sie zum Durchführen eines der Befehle veranlasst wird, auch Information aus den Adressfeldern im Ausgabeschlitz empfängt, der diesen einen der Befehle ausgibt, wobei zumindest eine der Funktionseinheiten die Information als Operanden bei der Durchführung verwendet.

7. Prozessor nach einem oder mehreren der Ansprüche 1 bis 6, worin die Multiport-Registerdatei zumindest einen Schreibport enthält, wobei der Prozessor Schreibzugang gewährende Mittel zum selektiven Versorgen von Zugriff zum Schreibport oder zu Schreibporten zu jenen Funktionseinheiten enthält, die zum parallelen Durchführen der Befehle veranlasst werden und daraus ein Ergebnis erzeugen.

8. Prozessor nach Anspruch 7, worin das Befehlsregister in der zweiten Anzahl jeweiliger Ausgabeschlitze zum Ausgeben der Befehle organisiert ist, jeder Ausgabeschlitz die gleiche jeweilige Anzahl von Ergebnisadressfeldern enthält, und die Schreibzugang versorgenden Mittel zum Führen eines Inhalts der Adressfelder in einen Adresseingang oder in Adresseingänge des Schreibports oder der Schreibporte angeordnet ist.

9. Prozessor nach Anspruch 8, wobei die Schreibzugang versorgenden Mittel zum Koppeln eines Ausgangs einer der Funktionseinheiten in Kombination mit dem Inhalt des Ergebnisadressfeldes nach einem Schreibport angeordnet sind, um eine Latenzperiode nachdem diese Funktionseinheiten zum Durchführen eines Befehls veranlasst sind.

10. Prozessor nach Anspruch 9, worin die Registerdatei zumindest zwei Schreibporte enthält, die Schreibwählmittel Vorzuordnungsmittel enthält, die zum Vorzuordnen eines besonderen Schreibports zu einer der Funktionseinheiten für einen Taktzyklus nach dem Vorzuordnen angeordnet ist, wobei in diesen Taktzyklus das Ergebnis der Durchführung in einer der Funktionseinheiten zur Verfügung kommt, zum Koppeln des Ausgangs der einen der Funktionseinheiten zum besonderen Schreibport und zum Eingeben des Inhalts des Ergebnisadressfeldes in den besonderen Schreibport für den Taktzyklus.

11. Prozessor nach Anspruch 10, worin die Vorzuordnungsmittel zum Wählen des besonderen Schreibports aus den Schreibporten mit der Einschränkung angeordnet ist, dass dieser besonderen Schreibport nicht zuvor einer der Funktionseinheiten für den Taktzyklus zugeordnet ist.

12. Prozessor nach Anspruch 11, wobei die Vorzuordnungsmittel eine Matrix von Registern enthält.

## Revendications

1. Processeur comprenant :
(a) un premier nombre d'unités fonctionnelles (ALU1, ALU2, MUL, FPU, MEM), pour exécuter des opérations respectives parallèlement entre elles, le premier nombre étant au moins trois;
(b) un registre d'instructions (CIIR) pour contenir un deuxième nombre d'instructions, le deuxième nombre étant au moins deux et étant inférieur au premier nombre, et pour contenir un code pour spécifier quelle instruction quelconque est destinée à l'une quelconque des unités fonctionnelles;
(c) des moyens de commande d'exécution pour amener des unités appropriées parmi les unités fonctionnelles à exécuter en parallèle les instructions dans le registre d'instructions;
(d) un fichier de registre à plusieurs accès (403) pour mémoriser des opérandes concernant les instructions dans le registre d'instructions; le fichier de registre à plusieurs accès (403) comprenant un troisième nombre d'accès de lecture de même largeur (R₁ₐ, R_{1b}, R₂ₐ, R_{2b}, R₃ₐ, R_{3b}) pour permettre un accès parallèle aux opérandes, le troisième nombre d'accès de lecture (R₁ₐ, R_{1b}, R₂ₐ, R_{2b}, R₃ₐ, R_{3b}) étant au moins égal à un nombre maximal d'opérandes requis du fichier de registre (403) par tout sous-jeu d'unités fonctionnelles (ALU1, ALU2, MUL, FPU, MEM) qui est composé du deuxième nombre d'unités fonctionnelles, le troisième nombre étant inférieur à un nombre total d'opérandes requis par toutes les unités fonctionnelles, le processeur comprenant :
(e) des moyens fournissant des accès de lecture pour fournir de manière sélective des unités fonctionnelles qui sont amenées à exécuter les instructions par accès parallèle aux accès de lecture,
caractérisé en ce que les registres dans le fichier de registre à plusieurs accès (403) sont accessibles pour toutes les unités dudit premier nombre d'unités fonctionnelles (ALU1, ALU2, MUL, FPU, MEM).

2. Processeur suivant la revendication 1, les accès de lecture étant organisés en groupes d'accès de lecture, au moins un groupe particulier comprenant au moins deux accès de lecture, les moyens fournissant les accès de lecture étant agencés pour sélectionner les accès de lecture fournis aux unités fonctionnelles par groupe, au moins une des unités fonctionnelles comportant au moins deux entrées pour recevoir des opérandes respectifs simultanément, les entrées étant couplées à des accès de lecture prédéterminés respectifs du groupe particulier chaque fois que ce groupe particulier est sélectionné pour cette unité parmi les unités fonctionnelles.

3. Processeur suivant la revendication 1 ou 2, dans lequel le registre d'instructions est organisé dans le deuxième nombre de fentes d'émission respectives pour émettre les instructions, chaque fente d'émission correspondant à un groupe respectif d'au moins un des accès de lecture, une unité fonctionnelle particulière recevant accès à l'accès ou aux accès de lecture du groupe correspondant à une fente d'émission particulière chaque fois qu'elle exécute l'instruction de cette fente d'émission particulière.

4. Processeur suivant la revendication 2 ou 3, dans lequel chaque groupe particulier contient un quatrième nombre d'accès prédéterminés, le quatrième nombre étant égal à un nombre maximal d'opérandes requis par l'une quelconque des unités fonctionnelles.

5. Processeur suivant la revendication 3 ou 4, dans lequel chaque fente d'émission particulière contient un même nombre prédéterminé de champs d'adresse couplés aux entrées d'adresse respectives des accès de lecture du groupe correspondant à cette fente d'émission particulière, pour donner accès aux opérandes adressés au niveau des accès de lecture, indifféremment au fait que l'unité fonctionnelle exécutant l'instruction de cette fente d'émission particulière nécessite les opérandes adressés.

6. Processeur suivant la revendication 5, agencé de manière à ce qu'au moins une des unités fonctionnelles, lorsqu'elle est amenée à exécuter une des instructions, reçoive également des informations des champs d'adresse dans la fente d'émission émettant cette instruction, ladite au moins une des unités fonctionnelles utilisant les informations comme opérande pendant l'exécution.

7. Processeur suivant l'une quelconque des revendications 1 à 6, dans lequel le fichier de registre à plusieurs accès comprend au moins un accès d'écriture, le processeur comprenant des moyens fournissant des accès d'écriture pour donner de manière sélective accès vers le ou les accès d'écriture à celles des unités fonctionnelles qui sont amenées à exécuter les instructions en parallèle et à former à partir de celles-ci un résultat.

8. Processeur suivant la revendication 7, dans lequel le registre d'instructions est organisé dans le deuxième nombre de fentes d'émission respectives pour émettre les instructions, dans lequel chaque fente d'émission contient le même nombre respectif de champs d'adresse de résultat, les moyens fournissant les accès d'écriture étant agencés pour diriger un contenu des champs d'adresse vers une ou des entrées d'adresse du ou des accès d'écriture.

9. Processeur suivant la revendication 8, les moyens fournissant les accès d'écriture étant agencés pour coupler une sortie de l'une des unités fonctionnelles, en combinaison avec le contenu dudit champ d'adresse de résultat, à un accès d'écriture un temps de latence après que les unités fonctionnelles ont été amenées à exécuter une instruction.

10. Processeur suivant la revendication 9, dans lequel le fichier de registre comporte au moins deux accès d'écriture, les moyens de sélection d'écriture comprenant des moyens de préattribution agencés pour préattribuer un accès d'écriture particulier à l'une des unités fonctionnelles pour un cycle d'horloge après ladite préattribution, cycle d'horloge au cours duquel le résultat d'exécution dans l'une des unités fonctionnelles sera mis à disposition, et pour coupler la sortie de l'une des unités fonctionnelles à l'accès d'écriture particulier et appliquer le contenu dudit champ d'adresse de résultat à l'accès d'écriture particulier pour le cycle d'horloge.

11. Processeur suivant la revendication 10, dans lequel les moyens de préattribution sont agencés pour sélectionner l'accès d'écriture particulier parmi les accès d'écriture, à la condition que cet accès d'écriture particulier n'ait pas été précédemment attribué à l'une des unités fonctionnelles pour le cycle d'horloge.

12. Processeur suivant la revendication 11, les moyens de préattribution comprenant une matrice de registres.
